(19) Europäisches Patentamt
European Patent Office
Office européen des brevets

(11) **EP 1 847 180 A2**

(12) **EUROPEAN PATENT APPLICATION**

(43) Date of publication:
24.10.2007 Bulletin 2007/43

(51) Int Cl.:
*A23G 9/38* (2006.01)     *A23C 21/00* (2006.01)
*A23J 3/08* (2006.01)

(21) Application number: 07105383.9

(22) Date of filing: 27.03.2006

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(62) Document number(s) of the earlier application(s) in accordance with Art. 76 EPC:
**06006298.1 / 1 839 495**

(71) Applicant: **Nestec S.A.**
**1800 Vevey (CH)**

(72) Inventors:
• **Bovetto, Lionel Jean René**
**74500, Larringes (FR)**

• **Panyam, Dinakar**
**Fremont, CA 94536 (US)**
• **Schmitt, Christophe Joseph Etienne**
**1092, Belmont S/Lausanne (CH)**

(74) Representative: **Rupp, Christian**
**Mitscherlich & Partner**
**Patent- und Rechtsanwälte**
**Sonnenstrasse 33**
**80331 München (DE)**

Remarks:
This application was filed on 30 - 03 - 2007 as a divisional application to the application mentioned under INID code 62.

(54) **Protein-enriched frozen dessert**

(57) The present invention relates to nutritionally balanced frozen desserts, in particular to pasteurised frozen dessert having a high protein content and to a method for manufacturing them. Whey protein micelles, concentrates thereof and/or powders thereof can be used in the manufacture of frozen dessert.

Figure 1

**Description**

**Field of the invention**

The present invention relates to frozen desserts, in particular to pasteurised frozen dessert having a high protein content and to a method for manufacturing them. The present invention also relates to the use of whey protein micelles, concentrates thereof and/or powders thereof in the manufacture of frozen desserts.

**Background**

There have been many attempts to improve the nutritional quality of frozen sorbets, especially of fat-containing ice-cream.

Low-fat ice-creams have been on the market for decades. These recipes generally have a higher carbohydrate content, make use of artificial sweeteners or have a higher protein content. High-protein frozen food products are disclosed in US 2006/0008557 for instance.

Increasingly indeed proteins, in particular whey proteins, are being used as a partial substitute for fat and also as an emulsifier in food applications.

US 6767575 B1 discloses a preparation of an aggregate whey protein product, whereby whey protein is denatured by acidification and heating. The protein aggregates thus obtained are used in food application.

GB 1079604 describes improvements in the manufacture of cheese, whereby whey proteins undergo heat treatment at an optimum pH value, in order to obtain insoluble whey proteins which are then added to raw milk.

WO 93/07761 is concerned with the provision of a dry microparticulated protein product which can be used as a fat substitute.

US 5750183 discloses a process for producing proteinaceous microparticles which are useful as fat substitute containing no fat.

A proteinaceous fat substitute is also disclosed in WO 91/17665 whereby the proteins are in the form of a water-dispersible microparticulated denatured whey protein.

One of the problems encountered with the production of products containing globular proteins in general, and whey protein in particular, however is their limited processability. Indeed, protein molecules when heated, or when subjected to acidic or alkaline environment or in the presence of salts tend to lose their native structure and reassemble in various random structures such as gels, for example.

The preparation of gelled aqueous compositions of whey proteins is the subject of EP 1281322.

Elofsson et al. in International Dairy Journal, 1997, p.601-608 describe cold gelling of whey protein concentrates.

Similarly, Kilara et al. in Journal of Agriculture and Food 20 Chemistry, 1998, p.1830-1835 describes the effect of pH on the aggregation of whey proteins and their gelation.

This gel effect presents limitation in terms of not only processability (e.g. clogging of machines used in the manufacture of protein-containing products) but also in terms of the texture thus obtained, which may not be desirable for the frozen dessert applications.

Controlled denaturation of proteins is thus desirable in order to widen the use of proteins.

Erdman in Journal of American College of Nutrition, 1990, p.398-409 describes that the quality of microparticulated protein is not affected despite using high shear and heat.

EP 0603981 also describes a heat stable oil-in-water emulsion containing proteins.

A further problem encountered by the use of whey proteins is their impact on the taste profile of the end-product e.g. they may leave an astringent sensation.

Thus, an object of the invention is to provide a technique for improving the impact of frozen desserts on a consumer, such as e.g. the nutritional profile of frozen desserts and/or improving the sensory profile of protein-containing frozen desserts.

**Summary of the invention**

Accordingly, this object is achieved by means of the features of the independent claims. The dependent claims develop further the central idea of the present invention.

To achieve this object, a pasteurised frozen dessert comprising whey protein micelles is provided according to a first aspect of the invention.

In a second aspect, the invention provides a frozen dessert having a protein content of more than 8%, at least a portion of the proteins being present as whey protein micelles.

A further aspect relates to a pasteurised frozen dessert having more than 6%, preferably more than 8%, most preferred more than 10% protein content and an essentially neutral pH value, the fat caloric value being less than 45%.

A pasteurised frozen ice cream having per weight at least 8% proteins, 15% to 28% carbohydrates and 3% to 7% fat falls under another aspect of the present invention.

The use of whey protein micelles in frozen desserts constitutes another aspect of the present invention.

Finally, the present invention provides, according to further aspect, a process for the manufacture of a frozen dessert comprising at least the steps of:

a. Blending a mix of ingredients comprising whey protein micelles, a concentrate thereof or a powder thereof,
b. Pasteurising the mix,
c. Optionally, homogenising the mix,
d. Freezing the mix.

**Figures**

The present invention is further described hereinafter with reference to some preferred embodiments shown in the accompanying figures in which:

Fig. 1 shows the result of an experiment demonstrating the effect of pH and heat treatment on the micellisation of β-lactoglobulin.

Fig. 2 is showing a mean to determine the pH of micellisation for a commercial preparation (Bipro®, Batch JE032-1-420) using turbidity measurements at 500 nm.

Fig. 3 is a Transmission Electron Microscopy micrograph from whey protein micelles (2 wt.%, WPI 95, Lactalis) at pH 7.4. Scale bar is 200 nm.

Fig. 4 shows the result of an experiment evaluating the impact of the ionic strength (Arginine HCl) on the formation of protein micelles at constant pH of 7.0.

Fig. 5 shows the volume stability (FVS) of foam stabilized by 1 wt.% β-lactoglobulin micelles (Davisco) at pH 7.0 in presence of 60 mM Arginine HCl compared to non-micellised β-lactoglobulin.

Fig. 6 shows the intensity-based equivalent hydrodynamic diameter of whey protein obtained by heat-treatment of a 1wt% β-lactoglobulin dispersion for 15 min at 85°C at pH ranging from 2 to 8. Whey protein micelles are obtained at pH 4.25 (positively charged with a zeta potential around +25mV) and at pH 6.0 (negatively charged with a zeta potential around -30mV). Z-averaged hydrodynamic diameter of the micelles was 229.3 nm at pH 4.25 and 227.2 nm at pH 6.0. The corresponding micrographs of the micelles obtained by TEM after negative staining are shown. Scale bars are 1 μm.

Fig. 7 shows a highly schematic structure of a whey protein micelle.

Fig. 8 shows a SEM (Scanning electron microscopy) micrograph of a whey protein micelle powder obtained after spray drying of a 20% protein content dispersion after microfiltration.

Fig. 9 is a negative staining TEM micrograph of a whey protein micelles dispersion obtained at 4% protein content.

Fig. 10 is a negative staining TEM micrograph of a whey protein micelle dispersion obtained at 20% protein content after microfiltration.

Fig. 11 shows the heat stability of a whey protein micelle dispersion obtained at 10% protein content after microfiltration at pH 7.0 in presence of NaCl after heating at 85°C for 15 min.

Fig. 12 shows the heat stability of a whey protein dispersion obtained at 4% protein content at pH 7.0 in presence of NaCl after heating at 85°C for 15 min.

Fig. 13 is a negative staining TEM micrograph from a 4% whey protein micelles dispersion based on a pure whey protein micelle spray dried powder after dispersion at 50°C in deionised water.

Fig. 14 is a graph showing the size distribution of micelles obtained by the process of the invention using a 4t% Prolacta 90 whey protein isolate treated at pH 5.9.

Fig. 15    is a SEM micrograph showing the internal structure after cutting of a spray-dried powder granule that is presented on figure 8.

Fig. 16    is a negative staining TEM micrograph of a 4% whey protein micelles dispersion based on a pure freeze dried whey protein micelle powder after at room temperature in deionised water. Scale bar is 0.5 micrometre.

Fig. 17    is a schematic view of the WPM coating by SBO (sulphated butyl oleate) upon increasing the mixing ratio at pH 3.0.
Grey circle: WPM with positive surface charges.
Black head+tail: negatively charged head and hydrophobic tail from SBO.

Fig. 18    is a photograph of a whey protein micelle concentrate at 20% obtained after evaporation in which 4% NaCl is added.

**Detailed description of the invention**

The present invention, in one aspect, relates to frozen desserts comprising whey protein micelles.

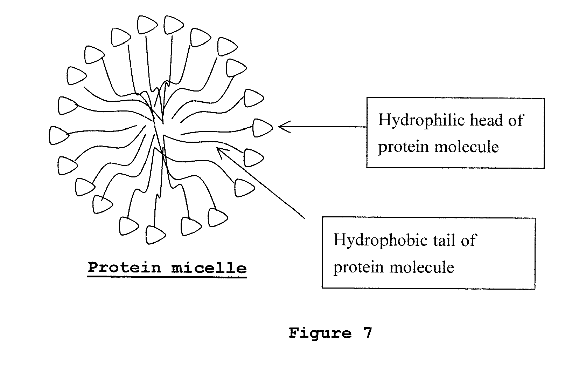

Figure 7 is a schematic representation of the whey protein micelles which can be used in the frozen dessert of the present invention, wherein the whey proteins are arranged in such a way that the hydrophilic parts of the proteins are oriented towards the outer part of the agglomerate and the hydrophobic parts of the proteins are oriented towards the inner "core" of the micelle. This energetically favourable configuration offers good stability to these structures in a hydrophilic environment.

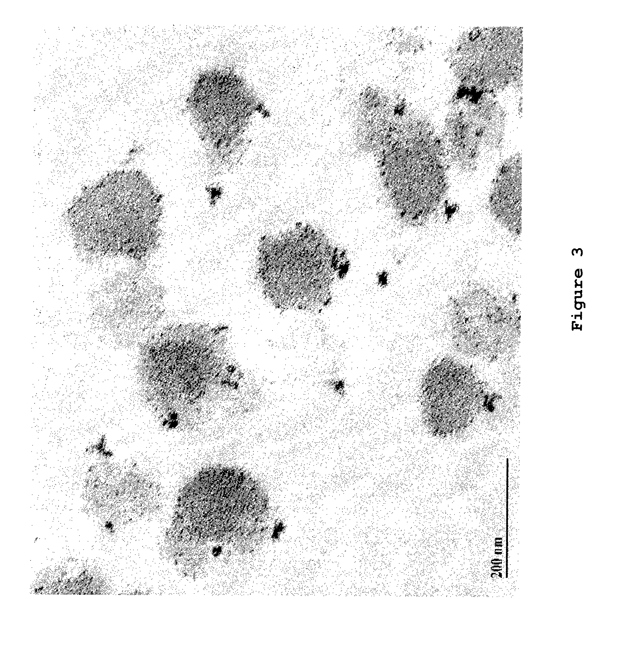

The specific micelle structure can be seen from the figures, in particular figures 3, 9, 10, 13 and 15, wherein the micelles used in the present invention consist essentially of spherical agglomerates of denatured whey protein.

Due to their dual character (hydrophilic and hydrophobic), this denatured state of the protein seems to allow interaction with a hydrophobic phase, e.g. a fat droplet or air, and a hydrophilic phase. The whey protein micelles therefore have perfect emulsifying and foaming properties.

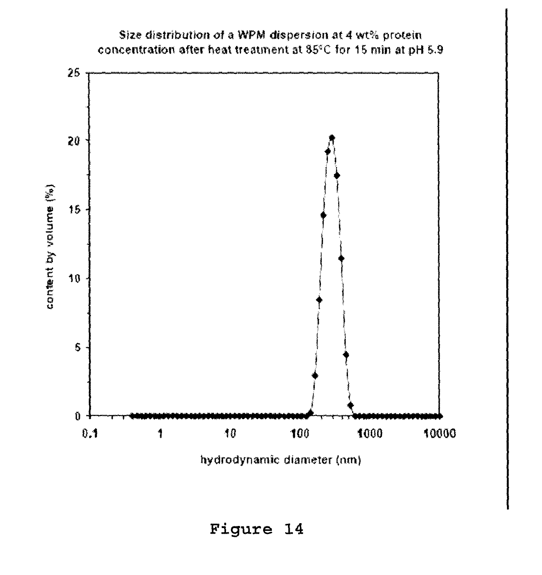

Furthermore, the micelles may be produced in such a way that they have a sharp size distribution (see Fig. 14), such that more than 80% of the micelles produced have a size smaller than 1 micron, preferably between 100nm and 900nm, more preferably between 100-770nm, most preferably between 200 and 400nm.

The mean diameter of the micelles can be determined using Transmission Electron Microscopy (TEM). In order to do so, the liquid micelle samples are encapsulated in agar gel tubes. Fixation is achieved by immersion in a solution of 2.5% glutaraldehyde in 0.1M, pH 7.4 cacodylate buffer and post-fixation with 2% Osmium tetroxide in the same buffer, both solutions containing 0.04% Ruthenium red. After dehydration in a graded ethanol series (70, 80, 90, 96, 100% ethanol), the samples are embedded in Spurr resin (Spurr/ethanol 1:1, 2:1, 100%). After polymerization of the resin (70°C, 48 hours), semi-thin and ultra-thin sections are cut with a Leica ultracut UCT ultra-microtome. Ultra-thin sections, stained with aqueous uranyl-acetate and lead citrate, are then examined by transmission electron microscopy (Philips CM12, 80 kV).

Without wishing to be bound by theory, it is thought that during micelle formation, the micelle reach a "maximum" size, due to the overall electrostatic charge of the micelle repelling any additional protein molecule, such that the micelle cannot grow in size any longer. This may account for the narrow size distribution observed (cf. Fig. 14).

The whey protein micelles which can be used in the present invention are obtainable e.g. by a process described in detail in the following.

As the whey protein to be used in manufacture of micelles, any commercially available whey protein isolates or concentrates may be used, i.e. whey protein obtained by any process for the preparation of whey protein known in the art, as well as whey protein fractions prepared therefrom or proteins such as β-lactoglobulin (BLG), α-lactalbumin and serum albumin. In particular, sweet whey obtained as a by-product in cheese manufacture, acid whey obtained as by-product in acid casein manufacture, native whey obtained by milk microfiltration or rennet whey obtained as by-product in rennet casein manufacture may be used as the whey protein. The whey protein may be from a single source or from mixtures of any sources.

The native whey protein source is not restricted to whey isolates from bovine origin, but pertains to whey isolates from all mammalian animal species, such as from sheep, goats, horses, and camels. Also, the process described herein may apply to mineralised, demineralised or slightly mineralised whey preparations. By "slightly mineralized" is meant any whey preparation after elimination of free minerals which are dialyzable or diafiltrable, but which maintains minerals associated to it by natural mineralisation after preparation of the whey protein concentrate or isolate, for example. These "slightly mineralised" whey preparations have had no specific mineral enrichment.

Whey proteins have a better protein efficiency ratio (PER = 118) compared for example to casein (PER= 100). PER is a measure of a protein quality assessed by determining how well such protein supports weight gain. It can be calculated by the following formula:

PER = body weight growth (g) / protein weight intake (g).

| Examples: | PER | % Casein |
|---|---|---|
| casein | 3.2 | 100 |
| Egg | 3.8 | 118 |
| Whey | 3.8 | 118 |
| Whole Soya | 2.5 | 78 |
| Wheat gluten | 0.3 | 9 |

For producing whey protein micelles, whey proteins may be present in an aqueous solution in an amount of 0.1 wt.% to 12 wt.%, preferably in an amount of 0.1 wt.% to 8 wt.%, more preferably in an amount of 0.2 wt.% to 7 wt. %, even more preferably in an amount of 0.5 wt.% to 6 wt.%, most preferably in an amount of 1 wt.% to 4 wt.% on the basis of the total weight of the solution.

The aqueous solution of the whey protein preparation as present before the micellisation step may also comprise additional compounds, such as by-products of the respective whey production processes, other proteins, gums or carbohydrates. The solution may also contain other food ingredients (fat, carbohydrates, plant extracts, etc). The amount of such additional compounds preferably doesn't exceed 50 wt.%, preferably 20 wt.%, and more preferably does not exceed 10 wt.% of the total weight of the solution.

The whey protein, as well as the fractions and/or the main proteins thereof may be used in purified form or likewise in form of a crude product. The content of divalent cations in the whey protein for the preparation of the whey protein micelles may be less than 2.5%, more preferably less than 2%, even more preferably less than 0.2%. Most preferably the whey proteins are completely demineralised.

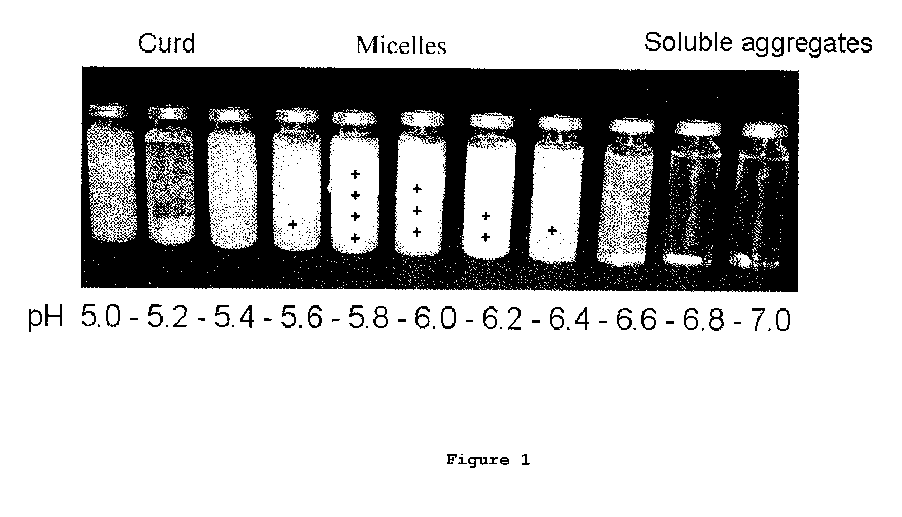

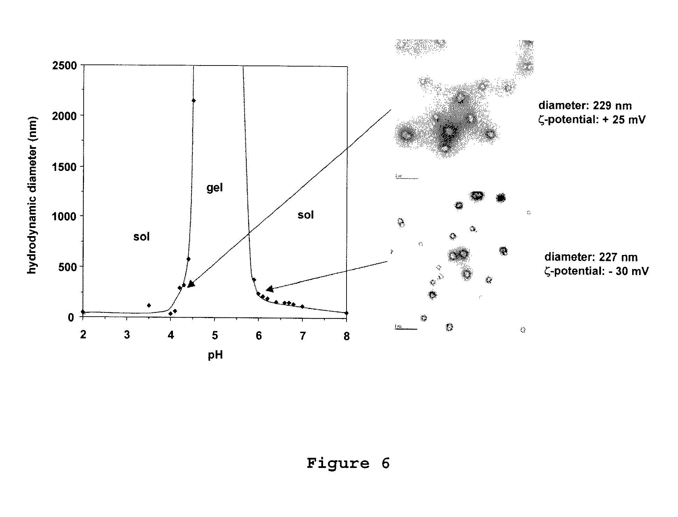

PH and the ionic strength are important factors in the manufacture of whey protein micelles. Thus, for extensively dialyzed samples which are virtually devoid or depleted of free cations such as Ca, K, Na, Mg, it has been found that when performing the heat treatment during a time period of 10s to 2 hours at a pH below 5.4, curd is obtained, while at a pH exceeding 6.8, soluble whey protein results (see Figure 1). Thus, only in this rather narrow pH window will whey proteins micelles having a diameter of less than 1$\mu$m be obtained. These micelles will have an overall negative charge. The same micelle form can also be obtained symmetrically below the isoelectrical pH, i.e from 3.5 to 5.0, more preferably 3.8 to 4.5, resulting in micelles being positively charged (see Figure 6).

Thus, in order to obtain positively charged micelles, micellisation of whey proteins may be done in a salt free solution at a pH value adjusted between 3.8 and 4.5 depending on the mineral content of the protein source.

Preferably, the micelles used in the present invention will have an overall negative charge. Thus, the pH of the aqueous solution prior to heating is adjusted to a range of from 6.3 to 9.0, for a content in divalent cations comprised between 0.2% and 2.5% in whey protein powder.

More specifically, to obtain negatively charged micelles, the pH is adjusted to a range of from 5.6 to 6.4, more preferably from 5.8 to 6.0 for a low divalent cation content (e.g. less than 0.2% of the initial whey protein powder). The pH may be increased up to 8.4 depending on the mineral content of whey protein source (concentrate or isolate). In particular, the pH may be between 7.5 to 8.4, preferably 7.6 to 8.0 to obtain negatively charged micelles in the presence of large amounts of free minerals and the pH may be between 6.4 to 7.4, preferably 6.6 to 7.2 to obtain negatively charged micelles in the presence of moderate amounts of free minerals. As a general rule, the higher the calcium and/or magnesium content of the initial whey protein powder, the higher the pH of micellisation.

In order to standardise the conditions of formation of whey protein micelles, it is most preferable to demineralise by any of the known demineralisation techniques (dialysis, ultrafiltration, reverse osmosis, ion exchange chromatography...), any source of liquid native whey proteins with a protein concentration ranging from that of sweet whey, microfiltration permeate of milk or acid whey (0.9% protein content) to that of a concentrate at 30% protein content. The dialysis can be done against water (distilled, deionised or soft), but as this will only allow removal of the ions weakly bound to the whey proteins, it is more preferable to dialyse against an acid at pH below 4.0 (organic or inorganic) to better control the ionic composition of the whey proteins. By doing so, the pH of whey protein micelle formation will be below pH 7.0, more preferably comprised between 5.8 to 6.6.

Prior to heating the whey protein aqueous solution, the pH is generally adjusted by the addition of acid, which is preferably food grade, such as e.g. hydrochloric acid, phosphoric acid, acetic acid, citric acid, gluconic acid or lactic acid. When the mineral content is high, the pH is generally adjusted by the addition of alkaline solution, which is preferably food grade, such as sodium hydroxide, potassium hydroxide or ammonium hydroxide.

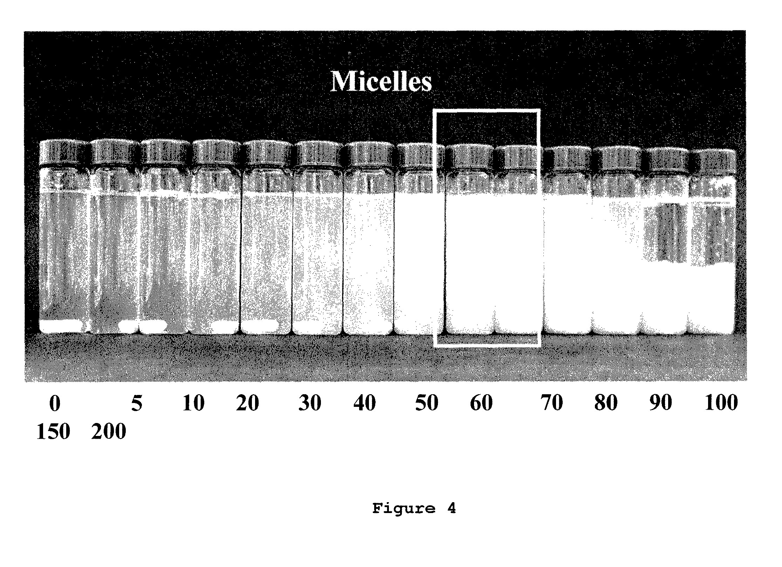

Alternatively, if no pH adjustment step is desired, it is possible to adjust the ionic strength of the whey protein preparation while keeping the pH constant. Then, ionic strength may be adjusted by organic or inorganic ions in such a way that allows micellisation at a constant pH value of 7. Figure 4 shows that micelles may be formed at a constant pH value of 7.0 while the ionic strength is varied by the addition of 70-80 mM of arginine HCl.

A buffer may be further added to the aqueous solution of whey protein so as to avoid a substantial change of the pH value during heat treatment of the whey protein. In principle, the buffer may be selected from any food-grade buffer system, i.e. acetic acid and its salts, such as e.g. sodium acetate or potassium acetate, phosphoric acid and salts thereof, e.g. $NaH_2PO_4$, $Na_2HPO_4$, $KH_2PO_4$, $K_2HPO_4$, or citric acid and salts thereof etc.

Adjusting the pH and/or the ionic strength of the aqueous solution, results in a controlled process yielding micelles having a size between 100nm-900nm, preferably between 100-700nm, most preferably between 200-400nm. Preferably, the distribution of micelles having dimensions between 100-700nm is greater than 80% when carrying out the process of micellisation described herein (see Figure 14).

In a second step of the process for forming whey protein micelles, the starting whey protein aqueous solution is then subjected to the heat treatment. In this respect, it has been found that for obtaining whey protein micelles, it is important to have the temperature in the range of from about 80 to about 98 °C, preferably of from about 82 to about 89 °C, more preferably of from about 84 to about 87 °C, most preferred at about 85 °C.

Once the desired temperature has been reached, the whey protein aqueous solution is kept at this temperature for a minimum of 10 seconds and a maximum of 2 hours. Preferably, the time period during which the aqueous whey protein solution is kept at the desired temperature ranges from 12 to 25 minutes, more preferably from 12 to 20 minutes, or most preferably about 15 minutes.

The heat treatment may also be achieved in a microwave oven or any similar equipment allowing heating by microwaves with a time/quantity ratio of 10 s/10 mL for a 4 wt% protein solution heated in a 1500 W apparatus up to boiling temperature (98°C at an altitude of 833m). A continuous process may also be used by addition of 8 or more magnetrons around a glass tube potentially prolonged by a holding tube to increase the time of incubation.

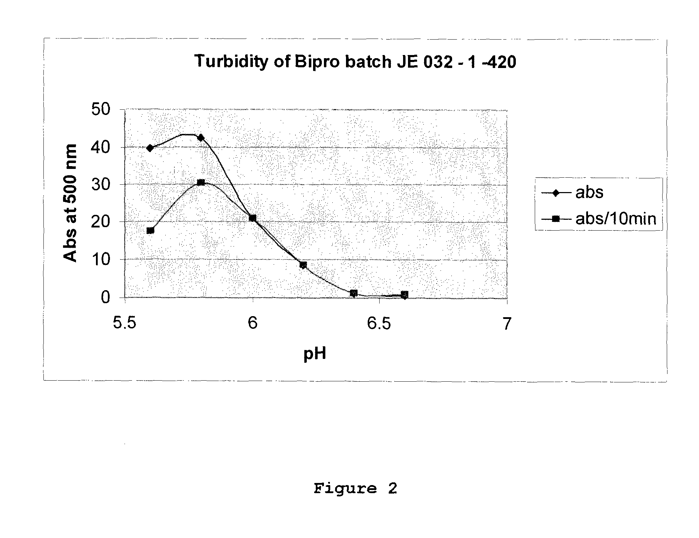

As shown in Figure 2, turbidity measurements are an indication of micelle formation. The turbidity measured by absorbance at 500nm may be at least 3 absorbance units for 1% protein solution but can reach 16 absorbance units when the yield of micellisation is above 80% (see Figure 2).

To further illustrate the effect of micelle formation from a physicochemical point of view, a 1 wt% dispersion of Bipro® has been heated for 15 minutes at 85°C at pH 6.0 and 6.8 in MilliQ water. The hydrodynamic diameter of the aggregates obtained after heat treatment was measured by dynamic light scattering. The apparent molecular weight of the aggregates was determined by static light scattering using the so-called Debye plot. The surface hydrophobicity was probed using the hydrophobic ANS probe and the free accessible thiol groups by the DTNB method using cystein as the standard amino acid. Finally, the morphology of the aggregates was studied by negative staining TEM. The results are presented in table 1.

**Table 1: Physicochemical properties of soluble whey protein aggregates obtained by heat treatment (85°C, 15 min) of a 1 wt% protein dispersion in presence or absence of NaCl.**

| pH | hydrodynamic diameter (nm) | molecular weight $M_w$ (x $10^6$ g.mol$^{-1}$) | morphology | $\zeta$-potential (mV) | protein surface hydrophobicity ($\mu$g.mmol$^{-1}$ ANS) | accessible SH groups (nmol SH.mg$^{-1}$ prot.) |
|---|---|---|---|---|---|---|
| 6.0 | $120.3\pm9.1$ | $27.02\pm8.09$ | Spherical micelles | $-31.8\pm0.8$ | 105.4 | $3.5\pm0.4$ |
| 6.8 | $56.2\pm4.6$ | $0.64\pm0.01$ | linear aggregates | $-27.9\pm1.2$ | 200.8 | $6.8\pm0.5$ |

From table 1, it is clear that the whey protein micelles that were formed at pH 6.0 allow protein to decrease its specific ANS surface hydrophobicity by a factor of 2 compared to non-micellised whey protein heated in the same condition, but at pH 6.8. The micelle formation can be also seen on the very high molecular weight of 27 x $10^6$ g.mol$^{-1}$ compared to 0.64 X $10^6$ g.mol$^{-1}$ for non-micellised protein, indicating a very condensed state of the matter within the micelle (low amount of water). Interestingly enough, the $\zeta$-potential of the micelles is even more negative than the non-micellised proteins even if the latter have been formed at a more basic pH than the micelles. This is the result of a more hydrophilic surface of the micelles being exposed to the solvent. Finally, one should note that the thiol reactivity of the micelles is much lower than that of the non-micellised protein because of the different pH of heat treatment.

It has been found that the conversion yield of native whey protein to micelles decreases when the initial protein concentration is increased before pH adjustment and heat treatment. For example, when starting with a whey protein isolate Prolacta 90 (lot 673 from Lactalis), the yield of formation of whey protein micelles drops from 85% (when starting with 4% proteins) to 50% (when starting with 12% of proteins). In order to maximize the formation of whey protein micelles (>85% of the initial protein content), it may be better to start with an aqueous whey protein solution having a protein concentration below 12%, preferably below 4%. Depending on the intended final applications, the protein concentration may be adjusted before heat treatment to manage the optimal whey protein micelles yield.

The whey proteins micelles obtainable according to process described herein shall have a size with a diameter of less than 1 $\mu$m, preferably of from 100 to 990 nm, more preferably from 100 to 700 nm, most preferably from 200-400nm.

Depending on the desired application, the yield of micelles may be of at least 50%, preferably at least 80% and the residual soluble aggregates or soluble protein content is preferably below 20%. The average micelle size is characterised by a polydispersity index below 0.200. As a consequence, the micelles may be observed as a white suspension which is stable and has a milky appearance in a large range of pH 2-8. It has been observed that whey protein micelles could form aggregates around pH 4.5, with however no sign of macroscopic phase separation after at least 12 hours at 4°C.

The purity of whey protein micelles can be obtained by determining the amount of residual soluble proteins. Micelles are eliminated by centrifugation at 20 °C and 26900 g for 15 min. The supernatant is used to determine the protein amount in quartz cuvettes at 280nm (1cm light pathlength). Values are expressed as a percentage of the initial value before heat treatment.

Proportion of micelles = (Amount of initial proteins - amount of soluble proteins) / Amount of initial proteins

The whey protein micelles obtainable according to a micellisation process described herein have not been submitted to any mechanical stress leading to reduction of the particle size during formation. This method induces spontaneous micellisation of whey proteins during heat treatment in the absence of shearing.

The whey protein micelles used in the present invention may be produced according to the process described herein but are not limited thereto.

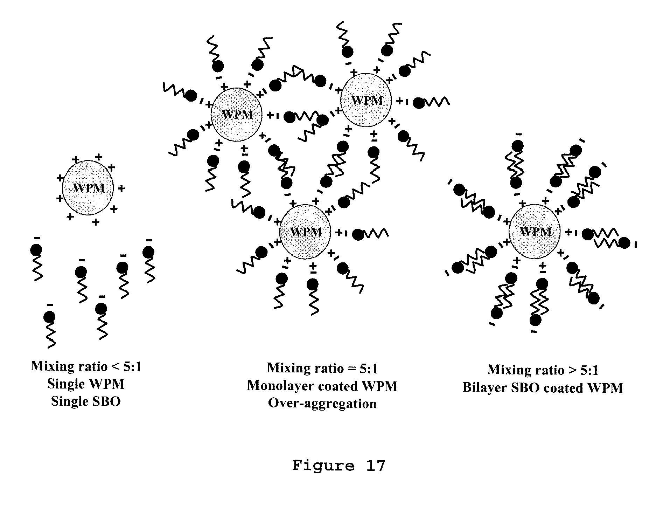

The whey protein micelles may be used as such in the frozen dessert of the present invention. They may also be used in the form of a concentrate of whey protein micelles or a powder thereof. Furthermore the whey protein micelles may be filled with an active component. Additionally, the whey protein micelles (pure or filled with active component) may be coated with an emulsifier such as phospholipids, for example, or other coating agents such as acacia gum in order to modulate the functionality and the taste of the whey protein micelles. Preferably, the coating is an emulsifier selected from sulphated butyl oleate, diacetyltartaric acid esters of mono- and diglycerides, citric acid esters of monoglycerides, stearoyl lactylates and mixtures thereof. Fig. 17 is a schematic representation of such coating with sulphated butyl oleate.

Thus, the whey protein micelle dispersion obtained after heat treatment may be concentrated to yield a whey protein micelle concentrate.

Concentration of the whey protein micelles may be carried out by evaporation, centrifugation, sedimentation or microfiltration, for example.

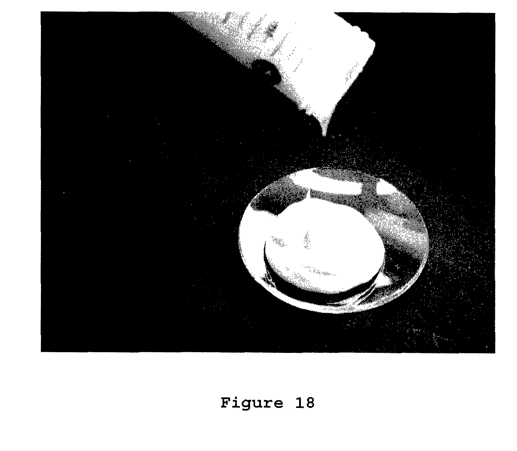

Evaporation may be carried out on the micelles by feeding the whey protein micelles obtained after heat treatment to an evaporator under vacuum, having a temperature between 50°C and 85°C. The resulting product will generally have the aspect of a gel or a cream as shown in Figure 18. The protein concentrate obtained by evaporation has a creamy, semi-solid texture and can be texturised in a spreadable texture by acidification using lactic acid. This liquid, creamy, pasty texture can be used to prepare acid, sweet, salty, aromatic, protein-rich frozen desserts.

Centrifugation may be carried out with high acceleration rate (more than 2000g) or low acceleration rate (less than 500g) after acidification of the whey protein micelle dispersion at a pH lower than 5, preferably 4.5.

Spontaneous sedimentation may also be carried out on the whey protein micelle dispersion by acidification. Preferably, the pH will be 4.5 and the sedimentation time is more than 12 hours.

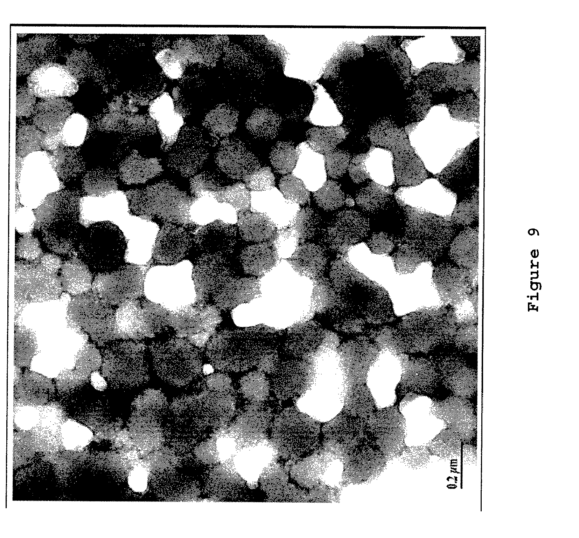

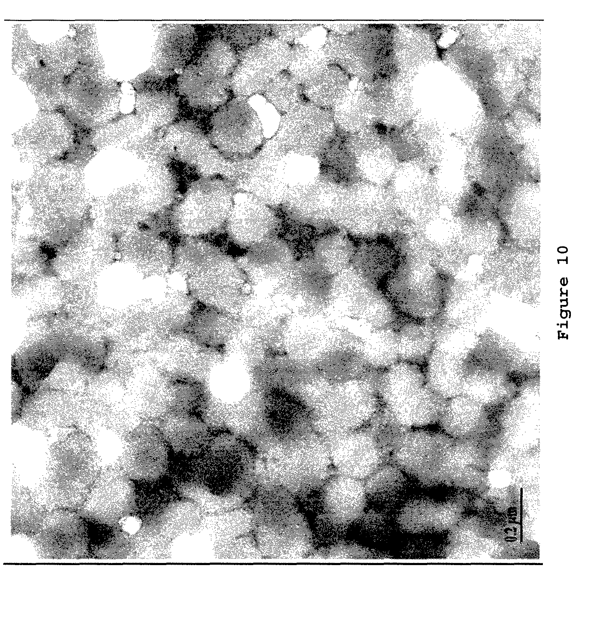

Preferably, concentration of the whey protein micelles may be achieved by microfiltration of the micelles dispersion. This enriching technique not only enables to concentrate whey protein micelles by removing the solvent but also enables the removal of non-micellised protein (such as native proteins or soluble aggregates). Thus, the final product only consists of micelles (as checked by Transmission Electron Microscopy - cf. figure 9 and 10). In this case, the concentration factor that is possible to achieve is obtained after the initial flow rate of permeate through the membrane has dropped to 20% of its initial value.

The whey protein concentrate thus obtained may have a protein concentration of at least 12%. Furthermore, the concentrate may contain at least 50% of the protein in the form of micelles. Preferably, at least 90% of the protein will be in the form of micelles.

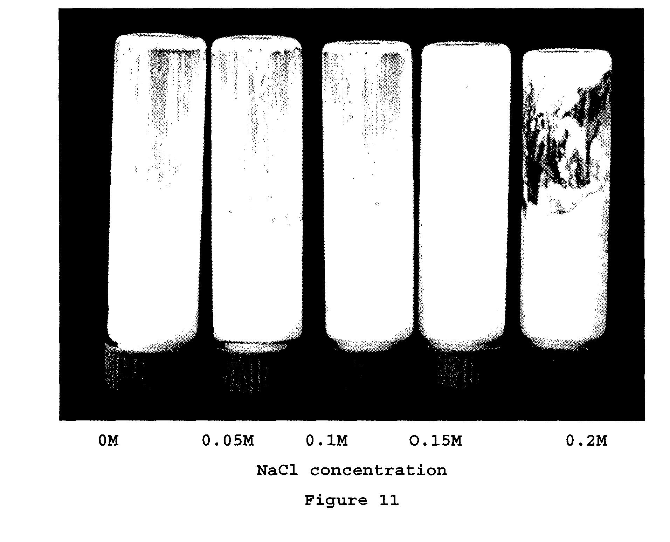

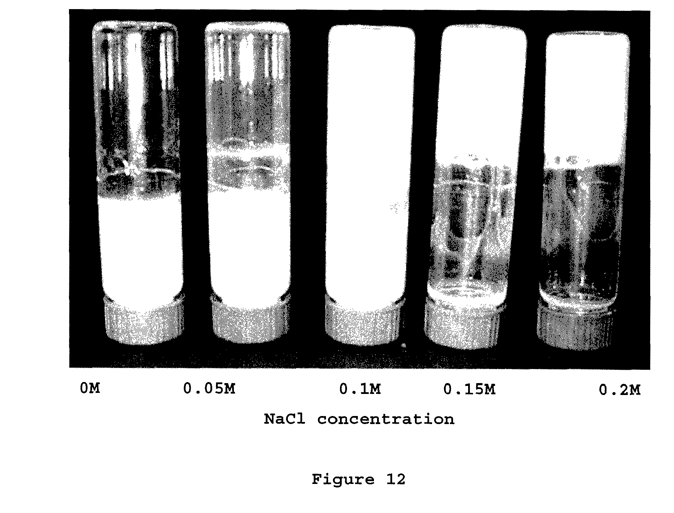

It is interesting to note that the concentrate, if adjusted to a protein content of 10% has the ability to withstand a subsequent heat treatment at 85°C for 15 min at pH 7.0 in presence for example of up to 0.15 M of sodium chloride, as shown in Figure 11. As a matter of comparison, a native whey protein dispersion (Prolacta90, lot 500658 from Lactalis) forms a gel in the presence of 0.1 M of sodium chloride at a protein concentration of only 4% (cf. Figure 12). The high stability of the micelle structure is thus preserved during the concentration step.

The concentrate may be used as such or diluted depending on the intended frozen dessert.

For instance, the whey protein micelle concentrate in liquid or dried form may be diluted to a protein content of 9% like in sweet and condensed milk. The milk minerals, lactose and sucrose can be added so that the final product will have similar nutritional profile compared to milk, but only whey protein as the protein source. This whey protein based blend is more stable than sweet condensed milk against Maillard reaction (based on the speed of development of a brown colour) when incubated 2 hours at 98°C (temperature of boiling water at an altitude of 833 m).

The dried powder form of the whey protein micelles may be obtained by any known techniques, such as spray-drying, freeze-drying, roller drying etc. Thus, the whey protein micelles may be spray-dried or freeze-dried with or without addition of further ingredients and may be used as a delivery system or a building block to be used in the manufacture of the frozen dessert of the present invention.

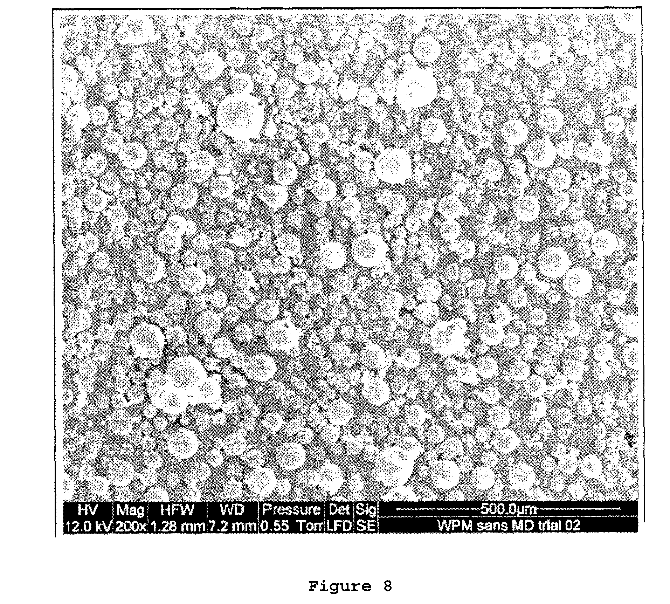

Figure 8 shows a powder obtained by spray-drying without addition of any further ingredients, having an average particle diameter size greater than 1 micron due to the micelle aggregation occurring during spray-drying. Such a whey protein powder having an average size greater than 1 micron may be used in the frozen dessert of the present invention. A typical average volume median diameter ($D_{43}$) of these powders is between 45 and 55 microns, preferably 51 microns. The surface median diameter ($D_{32}$) of the whey protein micelle powders is preferably between 3 and 4 microns, more preferably it is 3.8 microns.

The moisture content of the powders obtained after spray-drying is preferably less than 10%, more preferably less than 4%.

A whey protein micelle powder produced by spray-drying with or without addition of further ingredients may comprise at least 35% of whey protein micelles, up to at least 80% whey protein micelles.

Whey protein micelles powders have a high binding capacity for solvents such as water, glycerol, ethanol, oils etc. The binding capacity of the powders to water is at least 50%, preferably at least 90%, most preferably at least 100%. For solvents such as glycerol and ethanol, the binding capacity is of at least 50%. For oils, it is at least 30%. This property allows the powders to be sprayed or filled with further active agents and used in the frozen desserts of the present invention.

Such active agents may be selected from vitamins, minerals, antioxidants, poly-unsaturated fatty acids, peptides, plant extracts, protein hydrolysates, bioactives, aroma, sweeteners, sugars, polysaccharides, sucrose, supplements, pharmaceuticals, drugs, cosmetic components, components sensitive to heat, UV radiation, light, oxygen, metals, humidity, temperature etc. Active agents may be unstable compounds such as polyphenols (from coffee, green tea etc.), lycopene and other carotenoids. They may include compounds such as caffeine, hesperidins, soluble or non-soluble salts, probiotic bacteria, stains, maltodextrins, fats, emulsifiers, ligands etc.

The active agents may be included in the powder in an amount of 0.1-50%. Thus, the powder may act as a carrier for those functional ingredients. This presents the advantage that, for instance, caffeine bitterness perception is reduced when, caffeine as an active agent is filled into the whey protein micelle powders and used in caffeinated frozen dessert for example.

Additional ingredients may be mixed with the whey protein micelle concentrate prior to spray-drying. These comprise soluble or non-soluble salts, probiotic bacteria, stains, sugars, maltodextrins, fats, emulsifiers, sweeteners, aroma, plant extracts, ligands or bioactives (caffeine, vitamins, minerals, drugs...) and any mixtures thereof. The resulting mixed whey protein micelle powders comprise whey protein micelles and additional ingredients in a weight ratio ranging from 1:1 to 1:1000. In this case, the whey protein micelle powder obtained may also act as a carrier for active agents, in the frozen dessert of the invention.

Such powder is characterised by a very high flowability. For instance, these powders behave almost as liquids and present the advantages of easy usability and transferability. The angle of repose of these powders is preferably below 35°, more preferably below 30°. Such a low angle of repose allows the powders of the present invention to be used as flowing agents in food applications, for instance.

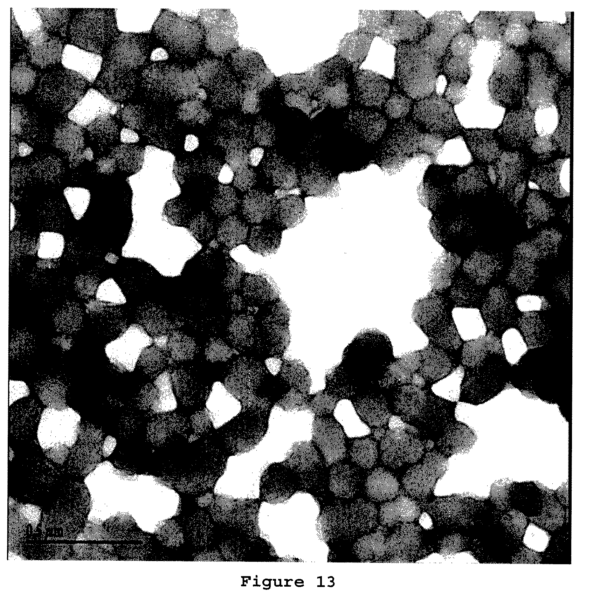

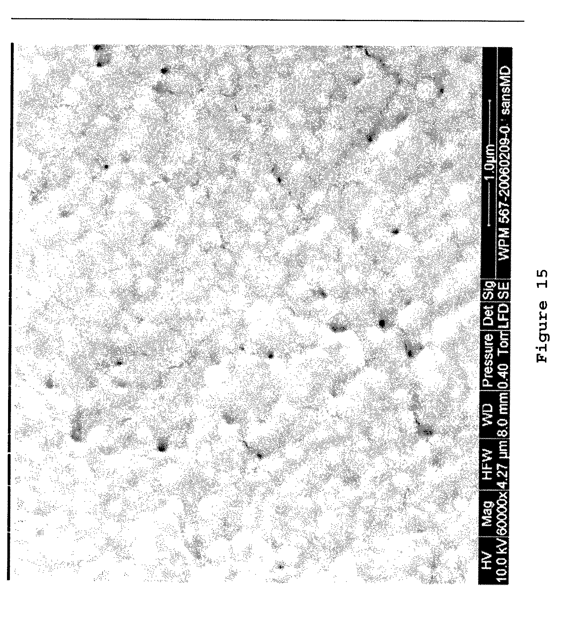

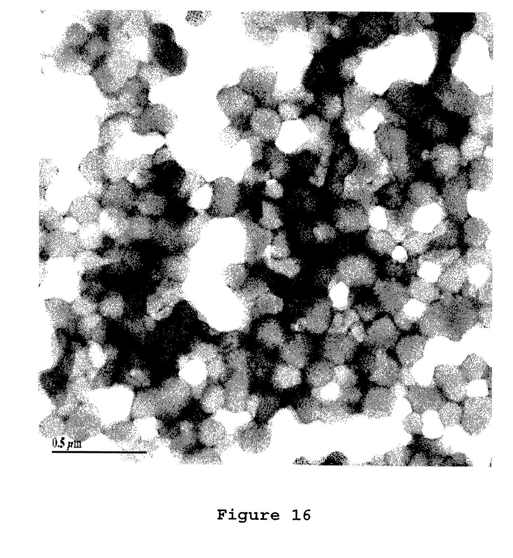

An important feature of these whey protein micelle powders is that the basic micelle structure of the whey proteins is conserved. Figure 15 shows a whey protein powder grain which has been sectioned, and whereby the individual whey protein micelles are observable. Furthermore, the micelle structure can be easily reconstituted in solvents. It has been shown that the powders obtained from whey protein micelle concentrate can be easily redispersed in water at room temperature or at 50°C. The size and structure of the whey protein micelles are fully conserved compared to the initial concentrate. For example, in Figure 13, the whey protein concentrate that was spray-dried at 20% protein concentration has been redispersed in deionised water at 50°C at a protein concentration of 50%. The structure of the micelles has been probed by TEM and can be compared to Figure 10. A similar shape of micelles was obtained. The diameter of the micelles was found to be 315 nm by dynamic light scattering with a polydispersity index of 0.2. Figure 16 also shows dispersion of a freeze-dried whey protein micelle powder, wherein the micelles are reconstituted.

The fact that the whey protein micelles and only a minor aggregated fraction were observed in solution after reconstitution of the spray-dried or freeze-dried powder confirms that whey protein micelles are physically stable regarding spray-drying, freeze-drying etc.

The whey protein micelles used in the present invention in any of the forms disclosed herein have shown to be ideally suited for use as an emulsifier, fat substitute, substitute for micellar casein or foaming agent, since they are able to stabilize fat and/or air in an aqueous system for prolonged period.

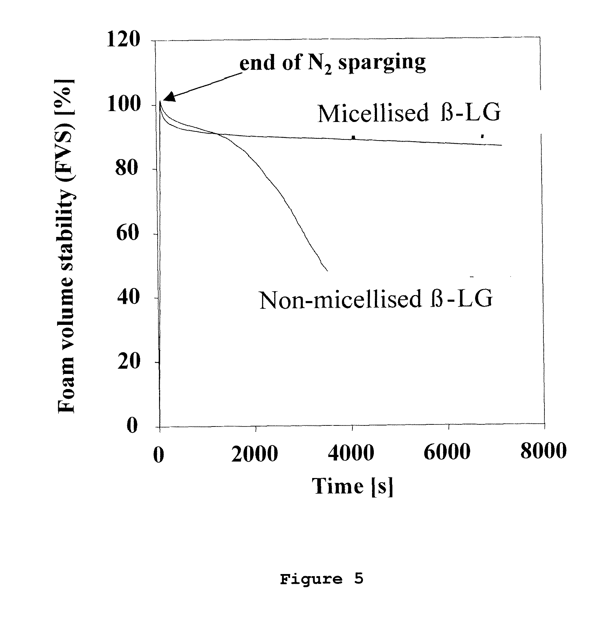

The foam stability is shown in Figure 5 which compares the use of non-micellised whey protein versus the micellised whey protein.

Thus, whey protein micelles may be used as an emulsifying agent, for which the material is ideally suited, since it has a neutral taste and no off-flavour is created by the use of such material. They may also be used as micellar casein substitute.

In addition, whey protein micelles are in a condition to serve as whitening agent, so that with one compound several tasks may be fulfilled. The whitening power of the concentrate is tremendously increased in comparison to the native protein powders. For example, the whitening power of 4mL of a 15% whey protein micelle concentrate is equivalent to 0.3% of titanium oxide in 100mL of a 2% soluble coffee cup.

As well as increasing the whitening power of dairy systems for the same total protein content, the fat content in a food matrix may be reduced. This feature represents a particular advantage of the use of whey protein micelles, since it allows to produce frozen desserts having a low fat content.

Furthermore, the whey protein micelles may be used either alone or together with other active materials, such as polysaccharides (e.g. acacia gum or carrageenans) to stabilise matrices and for example milky foam matrices. Due to their neutral taste, their whitening power and their stability after heat treatment, whey proteins micelles may be used to increase skimmed milk whiteness and mouthfeel.

Since whey is a material abundantly available, the use thereof reduces the cost of a product requiring an emulsifying, filling, whitening or foaming agent, while at the same time adding to its nutritional value. Indeed, the micelles used in the present invention have a Protein Efficiency Ratio of at least 100, preferably at least 110, which makes them important nutritional ingredients.

Accordingly, whey protein micelles may be used in any form described herein for the preparation of any kind of frozen dessert according to the present invention, such as e.g. ice-creams, milkshakes, smoothies, sorbets, water ice, mellorine, soft-ice, etc.

Whey protein micelles furthermore offer the exceptional advantages that protein-enriched pasteurised products may be obtained at concentration previously not attainable. Thus frozen dessert containing more than 6% protein, preferably more than 10% protein may be obtained. Additionally, since whey protein micelles may act as a fat substitute while maintaining desirable structural, textural and organoleptic properties, a wider variety of low-fat products may be obtained.

Accordingly, whey protein micelles may be comprised in the pasteurised frozen dessert of the present invention. A pasteurised frozen dessert according to the present invention has a high protein content, preferably of more than 6%. Due to the presence of whey protein micelles which are very stable to processing in comparison with native proteins, high protein pasteurised frozen desserts may be obtained, which are not achievable using the protein sources of the prior art.

Thus, according to another embodiment, the invention provides a frozen dessert having a protein content greater than 8%, wherein at least a portion of the protein are present as whey protein micelles. Preferably the protein content is greater than 10% weight, more preferably more than 12%, even more preferably more than 14%, most preferably more than 16%.

In the frozen desserts of the invention, at least 15% to 30% of the energy is provided by proteins, between 0% and 45% of the energy is provided by fat, and between 25% and 85% of the energy is provided by carbohydrates. Preferably the fat caloric value is less than 35%, more preferably less than 25%, even more preferably less than 20%, most preferably less than 10%. At least 50% of the total protein content may be provided as whey protein micelles.

The whey protein micelles used in the frozen desserts of the present invention may be provided in the form of a suspension, a concentrate or a powder, all these forms having been described above. The whey protein micelles may have an average size smaller than 1 micron, preferably between 100-900nm. If powders of whey protein micelles are used, these may have an average size greater than 1 micron. Furthermore, the whey protein micelle powder may act as a carrier or delivery vehicle for active agents.

The whey protein micelles or powders thereof may further be coated with an emulsifier such as phospholipids, for example, or other coating agents such as acacia gum in order to modulate the functionality and the taste of the whey protein micelles. Preferably, the coating is an emulsifier selected from sulphated butyl oleate, diacetyltartaric acid esters of mono- and diglycerides, citric acid esters of monoglycerides, stearoyl lactylates and mixtures thereof. Fig. 17 is a schematic representation of such coating with sulphated butyl oleate.

The frozen desserts of the present invention may be any frozen desserts selected from ice cream, milk shake, sorbet, mellorine, smoothy, water ice, soft-ice etc. They may be aerated. When aerated, they may have an overrun of 20% to 200%, preferably of 70% to 150%, depending on the intended frozen dessert.

The frozen dessert may comprise milk fat, one or more vegetable fats or mixtures thereof. Alternatively, it may contain no fat.

According to an embodiment of the present invention, a pasteurized frozen dessert, having more than 6%, preferably more than 8%, most preferred more than 10% protein content and an essentially neutral pH value, preferably between 6 and 8, is provided, wherein the fat caloric value is less than 45%. Preferably, the protein content consists essentially of whey proteins. The whey proteins are at least partially present in the form of whey protein micelles.

According to a preferred embodiment, the fat caloric value of the frozen dessert is less than 35%, preferably less than 25%, even more preferred less than 15%, most preferred less than 10%. Preferably, the frozen dessert comprises some fat.

The whey protein content is preferably more than 12%, more preferred more than 14%, even more preferred more than 16%, most preferred more than 18%.

A pasteurised frozen ice cream of the invention has per weight at least 8% proteins, 15% to 28% carbohydrates, and 3% to 7% fat.

Preferably, the ice cream has a protein content of more than 10%, preferably more than 12%, a carbohydrate content of 20% to 26% and a fat content of 4% to 6%.

At least a portion of the protein content in the ice cream of the present invention is present as whey protein micelles.

Accordingly, the use of whey protein micelles in a frozen dessert is part of the present invention. Preferably said whey protein micelles constitute at least 50% of the total protein content of the frozen dessert.

The nutritional profile of the frozen desserts of the present invention may be comparable to that of a glass of milk (when expressed in absolute numbers and/or in percentages).

The invention thus provides new frozen desserts which are nutritious and may be consumed as a healthy snack, on a daily basis.

Due to the presence of whey protein micelles, the frozen dessert of the present invention will have good sensory qualities, a creamy texture, while being nutritionally balanced. It may further contain other agents beneficial to health such as vitamins, minerals, probiotics etc.

In the manufacture of the frozen desserts of the present invention, a first step of blending a mix of ingredients comprising whey protein micelles, concentrates thereof or powders thereof is carried out. The whey protein micelles preferably have an average size of between 100nm-900nm. If a whey protein micelle powder is used, the average size of said powder is preferably greater than 1 micron.

Preferably the whey protein micelle content in the blend on a dry matter basis will be 10-40%, preferably, 15-35%, more preferably 30%. The frozen dessert thus produced may have a protein content greater than 6%, preferably greater than 8%.

Other ingredients of the blend may be any ingredients used in the manufacture of frozen desserts, such as MSNF, emulsifiers, sugars, fat source, aroma, stabilisers, inclusions etc.

The blend is then pasteurised at a temperature between 80°C and 87°C for a time period of at least 10s. Preferably, pasteurisation is carried out at an essentially neutral pH value, for instance between 6 and 8. Pasteurisation may also be carried out at a moderate acid pH between 4 and 6, for instance if natural fruit (pulp or juice) is added to the blend. Optionally, a fruit based acid blend can be added after pasteurisation.

The pasteurised blend may then be homogenised prior to freezing at a temperature of 50°C. After homogenisation, the blend may also be left to mature or "age" for up to 24hours prior to freezing.

The whey protein micelles based frozen dessert may then be associated to a fruit-based layer, in a two-layer frozen dessert or may comprise a fruit-based coating.

The frozen dessert thus produced will preferably have a protein content greater than 6%, more preferably greater than 8%.

By the process of the invention, frozen desserts having a high protein content, excellent sensory qualities and a balanced nutritional profile may be obtained.

In the present invention, any disclosure of list of ingredients is intended to disclose any possible combination of said ingredients, in any possible ratio.

The following examples illustrate the present invention without limiting it thereto.

## Examples

The following examples describe the preparation of micelles which can be optionally used in the context of the present invention.

### Example 1: Micellisation of β-Lactoglobulin

β-Lactoglobulin (lot JE002-8-922, 13-12-2000) was obtained from Davisco (Le Sueur, MN, USA). The protein was purified from sweet whey by ultra-filtration and ion exchange chromatography. The composition of the powder is 89.7 % protein, 8.85 % moisture, 1.36% ash (0.079 % $Ca^{2+}$, 0 . 013 % $Mg^{2+}$, 0.097 % $K^+$, 0.576 % $Na^+$, 0.050 % $Cl^-$) .

All other reagents used were of analytical grade (Merck Darmstadt, Germany).

The protein solution was prepared at 0.2% concentration by solvation of β-lactoglobulin in MilliQ® water (Millipore), and stirring at 20 °C for 2 h. Then pH of aliquots was adjusted to 5.0, 5.2, 5.4, 5.6, 5.8, 6.0, 6.2, 6.4, 6.6, 6.8, 7.0 by HCl addition. The solutions were filled in 20 ml glass vials (Agilent Technologies) and sealed with aluminum capsules containing a silicon/PTFE sealing. The solutions were heated at 85 °C for 15 min (time to reach the temperature 2.30 - 3.00 min). After the heat treatment, the samples were cooled in ice water to 20 °C.

The visual aspect of products (Figure 1) indicates that the optimal pH of micellisation is 5.8.

**Example 2: Micellisation of whey protein isolate**

Whey protein isolate (WPI) (Bipro®, Batch JE032-1-420) was obtained from Davisco (Le Sueur, MN, USA). The composition of the powder is reported in table 2.

The protein solution was prepared at 3.4% protein by solvation of whey protein powder in MilliQ® water (Millipore), and stirring at 20 °C for 2 h. The initial pH was 7.2. Then pH of aliquots was adjusted at 5.6, 5.8, 6.0, 6.2, 6.4 and 6.6 by HCl 0.1N addition.

The solutions were filled in 20 ml glass vials (Agilent Technologies) and sealed with aluminum capsules containing a silicon/PTFE sealing. The solutions were heated at 85 °C for 15 min (time to reach the temperature 2.30 - 2.50 min). After the heat treatment, samples were cooled in ice water to 20 °C.

The turbidity of heated whey proteins has been determined at 500 nm and 25°C, samples were diluted to allow the measurement in the range of 0.1-3 Abs unit (Spectrophotometer Uvikon 810, Kontron Instrument). Values were calculated for the initial protein concentration 3.4%.

The pH of micellisation was considered to be reached upon stability (less than 5% variation of the initial value) of the absorbance measured at 500 nm within an interval of 10 minutes for the same sample as illustrated by the figure 2. For this product the optimal pH for micellisation was 6.0 to 6.2. For this pH adjusted before heat treatment stable turbidity was 21 and residual soluble protein evaluated by absorbance at 280 nm after centrifugation was 1.9%. We can conclude that 45% of initial proteins were transformed in micelles at pH 6.0.

**Table 2:** Composition of WPI and sample characteristics after micellisation

| Supplier | Davisco |
|---|---|
| Product name | Bipro |
| Batch number | JE 032-1-420 |
| Composition (mg/100 g) | |
| Sodium | 650 |
| Potassium | 44 |
| Chloride*10 if ≤ 40 | 10 |
| Calcium | 82 |
| Phosphorus | 49 |
| Magnesium | 6 |
| Initial pH | 7.2 |
| pH micellisation | 6.0 |
| Turbidity (500 nm)for 3.4% protein in solution | 21 |
| Residual Soluble protein (%) by absorbance at 280 nm | 1.9 |

**Example 3: Microscopic observation of micelles**

Production of micelles:

Protein solution was prepared at 2% protein by solvation of whey protein powder (WPI 90 batch 989/2, Lactalis, Retier, France) in MilliQ® water (Millipore), and stirred at 20 °C for 2 h. Then pHs of aliquots were adjusted using HCl 0.1N or NaOH 0.1N.

The solutions were filled in 20 ml glass vials (Agilent Technologies) and sealed with aluminum capsules containing a silicon/PTFE sealing. The solutions were heated at 85°C for 15 min (time to reach the temperature 2.30-2.50 min). After the heat treatment, the samples were cooled in ice water to 20 °C. For this product the optimal pH for micellisation was 7.4.

Microscopic observations:

Liquid micelle samples were encapsulated in agar gel tubes. Fixation was achieved by immersion in a solution of 2.5% glutaraldehyde in O.1M, pH 7.4 cacodylate buffer and post-fixation with 2% Osmium tetroxide in the same buffer, both solutions containing 0.04% Ruthenium red. After dehydration in a graded ethanol series (70, 80, 90, 96, 100% ethanol), the samples were embedded in Spurr resin (Spurr/ethanol 1:1, 2:1, 100%). After polymerization of the resin (70°C, 48 hours), semi-thin and ultra-thin sections were cut with a Leica ultracut UCT ultra-microtome. Ultra-thin sections, stained with aqueous uranyl-acetate and lead citrate, were examined in transmission electron microscopy (Philips CM12, 80 kV) .

TEM micrograph is presented in figure 3. Obtained micelles are presenting a spherical shape with a diameter of 200 nm.

Particle size distribution

The intensity-based size distributions of micelles were measured for those micelles obtained by heat-treatment of a 1 wt % β-lactoglobulin dispersion for 15 min at 85°C at pH 4.25 (positively charged with a zeta potential around +25mV) and at pH 6.0 (negatively charged with a zeta potential around -30mV). Z-averaged hydrodynamic diaemeter of the micelles was 229.3 mm at pH 4.25 an 227.2 at pH 6.0. β-LG and whey protein aggregations were followed using dynamic light scattering. A Nanosizer ZS apparatus (Malvern Instruments, UK) equipped with a laser emitting at 633 nm and with 4.0 mW power was used. The instrument was used in the backscattering configuration, where detection is done at a scattering angle of 173°. This allows considerable reduction of the multiple scattering signals found in turbid samples. Samples were placed in a squared quartz cell (Hellma, pathlength 1 cm). The path length of the light beam was automatically set by the apparatus, depending on the sample turbidity (attenuation). The autocorrelation function was calculated from the fluctuation of the scattered intensity). The results are presented in figure 6. It shows that the average particle is characterized by a very narrow polydispersity index (<0.200). In consequence, the white suspension obtained by the present invention is stable and has a milky appearance in a large range of pH 3-8.

## Example 4: Micellisation of a β-lactoglobulin at a constant pH

The method described in example 1 was repeated with the proviso of using an aqueous solution of 2 % β-lactoglobulin. The pH of this solution has been adjusted to 7.0 after adding Arginine HC1 solutions to obtain a final salt concentration ranging from 5 to 200 mM and a final β-lactoglobulin concentration of 1%. Subsequent heat treatment (80 °C, 10 min, about 2 min heating up) was carried out to produce micelles.

The results are shown in Fig. 4 and clearly indicate that only in the ionic strength range of from about 50 to 70 mM, a substantial turbidity can be observed, indicating the presence of whey protein micelles.

## Example 5: Preparing a whitening agent

Native whey proteins (WPI 95 batch 848, Lactalis; 8 wt-% aqueous solution) were treated according to example 2. The resulting product lightness (L) was measured in trans-reflectance mode using a MacBeth CE-XTH D65 10° SCE apparatus equipped with a 2 mm measuring cell. The resulting lightness was L = 74.8, that could be compared to the value of L = 74.5 for full-fat milk.

## Example 6: Preparing an aqueous foam

Native β-lactoglobulin (Biopure, Davisco, lot JE 002-8-922, 2 wt-% aqueous solution) was mixed with 120 mM Arginine HCl solution so that the final β-lactoglobulin concentration was 1 wt.% and Arginine HCl 60 mM. The pH was then adjusted to 7.0 by addition of 1N HCl. The mixture was then heat treated at 80°C for 10 minutes so that 90% of initial β-lactoglobulin was converted into micelles having a z-averaged diameter of 130 nm. In this case, the diameter of the micelles was determined using a Nanosizer ZS apparatus (Malvern Instruments, UK). The sample was poured in a quartz cuvette and variations of the scattered light were recorded automatically. The obtained autocorrelation function was fitted using the cumulants method so that the diffusion coefficient of the particles could be calculated and thereafter the z-averaged hydrodynamic diameter using the Stokes-Einstein law. For this measurement, the refractive index of the solvent was taken as 1.33 and that of the micelles 1.45. A volume of 50 mL of the resulting dispersion of β-lactoglobulin micelles is then foamed by nitrogen sparging through a glass frit generating bubbles of 12-16 $\mu$m to produce a foam volume of 180 cm$^3$ using the standardised Foamscan™ (ITConcept) apparatus. The volume stability of the foam was then followed with time at 26°C using image analysis and compared to the stability of the foam obtained with β-lactoglobulin treated in the same conditions, but without Arginine HC1, where no micelles were formed. Fig. 5 shows that the foam volume stability is greatly improved by the presence of β-lactoglobulin micelles.

**Example 7: Whey based Fermented dairy product - fermentation trials**

Material

Whey protein isolate (WPI) (Bipro®) was obtained from Davisco (Le Sueur, MN, USA) (protein concentration 92.7%). Spray dried whey permeate (Variolac 836): Lactose concentration: 83 % -Minerals: 8%
Lactic Acid 50 %
Edible Lactose (Lactalis)
De-ionized water

Method

The Bipro® powder was dissolved in de-ionized water in order to have a protein concentration of 4.6 %, i.e. for 3 litres of solution 154.5 g of WPI powder and 2845.5 g of water. The hydration time was 3 hours. After hydration, this solution has been divided in samples of 200 ml to prepare the different trials:

Table 3

| Trial | Whey permeate (%) | Lactose (%) | pH adjustment | Heating 85°C / 15 min |
|---|---|---|---|---|
| 1 | 2.9 | 2.5 | 6.5 | + |
| 2 | 0 | 5 | 6 | + |
| 3 | 0 | 5 | 6.7 | - |
| 4 | 0 | 5 | 6.7 | + |
| 5 | 0 | 5 | 6.1 | + |
| 6 | 0 | 0 | 6 | + |
| 7 | 0 | 5 (added after pH adjustment) | 6 | - |
| 8 | 0 | 5 (added after pH adjustment) | 6 | + |

For each solution, lactic acid at 50 % has been added to adjust the pH before heating.
Samples were heated with the double boiler up to 85°C and maintain at this temperature during 15 minutes. After heating, solutions were cooled at 40°C and inoculated with Lactobacillus bulgaricus and Streptococcus thermophilus. Samples stayed 5h30 in a steam room at 41°C before to be placed in a cold room at 6°C.
The results are presented in Table 4.

Table 4

| Trial | Whey permeate | Lactose | pH | Heating | pH after 5h30 | Aspect |
|---|---|---|---|---|---|---|
| 1 | + | + | 6.5 | + | 4.68 | Very firm |
| 2 | - | + | 6 | + | 4.7 | Firm |
| 3 | - | + | 6.7 | - | 5.78 | Liquid |
| 4 | - | + | 6.7 | + | 4.81 | Very firm |
| 5 | - | + | 6.1 | + | 4.59 | Very firm |
| 6 | - | - | 6 | + | 4.99 | Very firm |
| 7 | - | - added after pH adjustment | 6 | - | 4.87 | Liquid with white speckles |

(continued)

| Trial | Whey permeate | Lactose | pH | Heating | pH after 5h30 | Aspect |
|---|---|---|---|---|---|---|
| 8 | - | - added after pH adjustment | 6 | + | 4.77 | Firm |

**Example 8: Whey protein enriched low-fat ice cream**

Material

Whey protein isolate (WPI, Prolacta90® from Lactalis, Rétiers, France) with a protein content of 90%
Skim milk powder with 35% protein content
Sucrose
Maltodextrins DE39
Anhydrous milk fat
Emulsifier
De-ionised water
Edible hydrochloric acid 1M

Method using in-line generation of whey protein micelles

Using a double-jacketed 80 L tank, the Prolacta90® powder was dispersed at 50°C in de-ionized water at a protein concentration of 11.6 wt% under gentle stirring in order to avoid foam formation. After 1 hour of dispersion, the pH of the dispersion was adjusted to the micellisation pH by addition of HCl. The temperature of the dispersion was raised to 85°C and maintained for 15 minutes in order to generate the whey protein micelles. After 15 minutes, the temperature was decreased to 50°C and the additional ingredients were sequentially added to the micelles dispersion (i.e. skim milk powder, maltodextrins DE39, sucrose, emulsifier and anhydrous milk fat). The final amount of mix was 50 kg with total solids content of 39.4% and a fat content of 5 wt%. After 30 minutes of hydration, the mix was two-step homogenised (80/20 bars) and pasteurised (86°C/30s) before ageing during overnight.
The day after, the ice-cream mix was frozen at an overrun of 100% using a Hoyer MF50 apparatus and hardened at -40°C before storage at -20°C. The final ice cream contained 10wt% proteins (17% caseins, 83% whey proteins) and 5 wt% fat on the ice cream mix basis. The caloric contribution of this ice cream is 51.4% from sugar, 27.9% from fat and 20.7% from proteins.

Method using powdered whey protein micelles

Using a double-jacketed 80 L tank, the whey protein micelle powder was dispersed at 50°C in de-ionized water under gentle stirring in order to avoid foam formation. After 15 minutes of dispersion, the additional ingredients were sequentially added to the whey protein micelles dispersion (i.e. skim milk powder, maltodextrins DE39, sucrose, emulsifier/stabilizers and anhydrous milk fat). The final amount of mix was 50 kg with total solids content of 37.5% and a fat content of 5 wt%. After 30 minutes of hydration, the mix was two-step homogenised (80/20 bars) and pasteurised (86°C/30s) before ageing during overnight.
The day after, the ice-cream mix was frozen at an overrun of 100% using a Hoyer MF50 apparatus and hardened at -40°C before storage at -20°C. The final ice cream contained 12.8 wt% proteins (13% caseins, 87% whey proteins) and 5 wt% fat on the ice cream mix basis. The caloric contribution of this ice cream is 44.9% from the sugar, 29.4% from the fat and 25.7% from the proteins.

**Example 9: Powdered whey protein micelles obtained by spray-drying**

Material

Whey protein isolate (WPI, Prolacta90® from Lactalis, Rétiers, France) with a protein content of 90%
Edible lactose
Maltodextrins DE39
De-ionised water
Edible hydrochloric acid 1M

Method

Using a double-jacketed 100 L tank, the Prolacta90® powder was dispersed at 50°C in de-ionized water at a protein concentration of 10 wt% under gentle stirring in order to avoid foam formation, i.e. 11 kg of Prolacta90® were dispersed in 89 kg of de-ionised water. After 1 hour of dispersion, the pH of the dispersion was adjusted to the micellisation pH (around 6.3 in that case) by addition of HCl. The temperature of the dispersion was raised to 85°C and maintained for 15 minutes in order to generate the whey protein micelles. After 15 minutes, the temperature was decreased to 50°C and the 10 wt% whey protein micelles dispersion was split in two batches of 50 kg. In a first trial, 20 kg of lactose were dispersed in 50 kg of micelles dispersion at 50°C and stirred for 30 min. Similarly, 20 kg of maltodextrins DE39 were added to the remaining 50 kg of whey protein micelles dispersion.

The two mixtures were then spray dried into a NIRO SD6.3N tower at a flow rate of 15 L/h. The air input temperature was 140°C and the air output temperature was 80°C. The water content of the obtained powders was lower than 5%.

The size of the whey protein micelles was determined in presence of lactose and maltodextrin (DE39) in water using dynamic light scattering before and after spray drying. The total protein concentration was set to 0.4 wt% by dilution of the dispersion before spray drying or reconstitution of the powder in order to be in the dilute regime of viscosity for whey protein micelles. A Nanosizer ZS apparatus (Malvern Instruments) was used and micelle diameter was averaged from 20 measurements.

The particle diameter determined for whey protein micelles in presence of lactose and maltodextrins (DE39) was 310.4 nm and 306.6, respectively. After reconstitution of the powders, the respective diameters were found to be 265.3 nm and 268.5, respectively. These measurements confirm than whey protein micelles were physically stable regarding spray drying. The results were corroborated by TEM microscopy observations of 0.1 wt% whey protein micelles dispersions in water using negative staining in presence of 1% phosphotungstic acid at pH 7. A Philips CM12 transmission electron microscope operating at 80 kV was used. Whey protein micelles were observed in solution before spray drying and after reconstitution of the spray-dried powder. No difference of morphology and structure could be detected.

**Example 10: Concentration by evaporation**

A whey protein isolate Prolacta 90 from Lactalis (lot 500648) has been reconstituted at 15°C in soft water at a protein concentration of 4% to reach a final batch size of 2500 kg. The pH was adjusted by addition of 1M hydrochloric acid so that the final pH value was 5.90. The whey protein dispersion was pumped through plate-plate APV-mix heat exchanger at a flow rate of 500 1/h. Pre-heating at 60°C was followed by heat treatment of 85°C for 15 minutes. Formation of whey protein micelles was checked by measurement of particle size using dynamic light scattering as well a turbidity measurement at 500 nm. The obtained 4% whey protein micelles dispersion was characterised by a hydrodynamic radius of particles of 250 nm, a polydispersity index of 0.13 and a turbidity of 80. The whey protein micelle dispersion was then used to feed a Scheffers evaporator at a flow rate of 500 1/h. The temperature and vacuum in the evaporator were adapted so that around 500 kg whey protein micelles concentrate having a protein concentration 20% were produced and cooled down to 4°C.

**Example 11: Enrichment by microfiltration**

A whey protein isolate Prolacta 90 from Lactalis (lo 500648) has been reconstituted at 15°C in soft water at a protein concentration of 4% to reach a final batch size of 2500 kg. The pH was adjusted by addition of 1M hydrochloric acid so that the final pH value was 5.90. The whey protein dispersion was pumped through plate-plate APV-mix heat exchanger at a flow rate of 500 l/h. A pre-heating at 60°C was followed by heat treatment of 85°C for 15 minutes. Formation of whey protein micelles was checked by measurement of particle size using dynamic light scattering as well a turbidity measurement at 500 nm. The obtained 4% whey protein micelles dispersion was characterised by a hydrodynamic radius of particles of 260 nm, a polydispersity index of 0.07 and a turbidity of 80. The micelle form of the protein was also checked by TEM, and micelle structures with an average diameter of 150-200 nm were clearly visible (Fig. 9). The whey protein micelle dispersion was cooled at 4°C and used to feed a filtration unit equipped with a 6.8 m² Carbosep M14 membrane at a flow rate of 180 l/h. In that case, the concentration of the whey protein micelles was performed at 10°C until the permeate flow rate reached 70 l/h. In that case, the final whey protein concentrate contained 20% of proteins. The structure of the micelles in the concentrate was checked by TEM, and clearly no significant change was visible compared to the 4% whey protein dispersion before microfiltration (Fig. 10).

**Example 12: Whey protein micelles powder comprising at least 90% whey protein.**

200 kg of a whey protein micelle concentrate obtained by microfiltration at 20% protein (see example above) were injected in a Niro SD6.3N tower using an atomisation nozzle ($\varnothing$ = 0.5 mm, spraying angle = 65°, pressure = 40 bars) at a product flow rate of 25 kg/h. The inlet temperature of product was 150°C and the outlet temperature was 75°C. The airflow in the tower was 150 m$^3$/h. The moisture content in the powder was less than 4% and the powder was characterized by a very high flowability. Scanning electron microscopy of the powder exhibited very spherical particles having an apparent diameter ranging from 10 to 100 $\mu$m (Fig. 8) .

**Example 13: Mixed whey protein micelle powder**

20 kg of a whey protein micelle concentrate were mixed with 1.7 kg of maltodextrins with a DE of 39 so that the final whey protein micelle to maltodextrin ratio in powder is 70/30. This mixture was injected in a Niro SD6.3N tower using an atomisation nozzle ($\varnothing$ = 0.5 mm, spraying angle = 65°, pressure = 40 bars) at a product flow rate of 25 kg/h. The inlet temperature of product was 150°C and the outlet temperature was 75°C. The airflow in the tower was 150 m$^3$/h. The moisture content in the powder was less than 4% and the powder was characterized by very high flow ability.
The powders of examples 13 and 14, when reconstituted in water, comprise essentially micelles having the same structure and morphology as the whey protein micelle concentrate.

**Example 14: Whey protein micelle powder obtained by freeze-drying**

Material

Whey protein micelle concentrate at 20% protein produced by microfiltration in example 12 with a protein content of 90%

Method

100g of whey protein micelles concentrate were introduced in a plastic beaker and frozen at -25°C for one week. This beaker was then placed in a lab-scale freeze drier Virtis equipped with a vacuum pump. Sample was left for 7 days until the pressure in the freeze drier remained constant at about 30 mbars. Around 20 g of freeze-dried whey protein micelles has been recovered.

**Example 15: Aqueous dispersion of whey protein micelles coated with sulfated butyl oleate (SBO) or any other negatively charged emulsifier**

Material

Whey protein micelle (WPM) powder from example 13 with a protein content of 90%
SBO
Hydrochloric acid (1M)

Method

WPM powder described in example 13 is dispersed in MilliQ water to achieve a final protein concentration of 0.1 wt%. This dispersion is filtered on 0.45 $\mu$m filters in order to remove possible WPM aggregates. The pH of this WPM dispersion was brought down to 3.0 by addition of hydrochloric acid 1M. A 1 wt% dispersion of SBO is prepared at pH 3.0.
The hydrodynamic radius and zeta potential of these WPM was determined using the Nanosizer ZS apparatus (Malvern Instruments Ltd.). Diameter was 250 nm and electrophoretic mobility + 2.5 $\mu$m. cm. V$^{-1}$. s$^{-1}$. The hydrodynamic radius and electrophoretic mobility of the SBO dispersion at pH 3.0 are 4 nm and - 1.5/-2.0 $\mu$m.cm.V$^{-1}$.s$^{-1}$, respectively.
After having performed this preliminary characterization, the SBO dispersion is used to titrate the WPM one, while following evolution of hydrodynamic radius and electrophoretic mobility of the mixture. It was found that the hydrodynamic radius was constant around 250-300 nm until a WPM/SBO weight-mixing ratio of 5:1 was reached. At this point, the hydrodynamic radius diverges dramatically to 20000 nm and precipitation of complexes WPM SBO is encountered. Upon further addition of SBO, higher than a mixing ratio of 5:1, the hydrodynamic progressively decreased to 250 nm, as found initially for WPM, levelling of from a ratio of 4:1 on. Following the electrophoretic mobility of the mixture showed that it decreased upon addition of SBO, reaching zero value for a mixing ratio of 5:1. Then it continued to drop upon SBO addition, starting levelling of at - 3.0 $\mu$m.cm.V$^{-1}$.s$^{-1}$ from ratio 4:1 on.
The explanation for these results is that the positively charged WPM are, in a first step coated electrostatically with the negative head of the SBO until full charge neutralisation is achieved (mixing ratio 5:1). At this point, the hydrophobic tails from the SBO are able to self-associate, leading to over-aggregation with very large hydrodynamic diameter and precipitation of complexes. Upon further addition of SBO, the hydrophobic tails associate further to form a double coating, exposing their negative head to the solvent. This lead to negatively charged WPM with a double coating of SBO (see figure 17) comparable to a full protein core liposome.

Similar results have been obtained with other acidic food grade Emulsifiers such as DATEM, CITREM, SSL (from Danisco) in aqueous solution at pH 4.2 where they are mainly ionized in their anionic form (-COO- chemical functions).

**Example 16:**

**Determination of repose angle for spray dried whey protein micelle powder, mixed whey protein micelle powder, whey protein isolate powder and low heat skim milk powder**

Material

Whey protein micelle powder from example 12 with a protein content of 90% (moisture 3.5%)
Mixed whey protein micelle powder from example 13 with a protein content of 90% (moisture 3.5%)
Whey protein isolate powder Prolacta 90 (lot 500658 from Lactalis, France; moisture 4%)
Low heat skim milk powder (lot 334314 from Emmi, Switzerland; moisture 3.5%)
Measuring device described to measure repose angle for powders according to ISO norm 4324

Method

The powder is placed in a funnel with a stem diameter of 99 mm and the powder is forced to flow using the agitator. The powder falls on a transparent plastic vessel with diameter 100 mm and a height of 25 mm. The angle of repose, $\Phi$, is measured from the following equation:

$$\text{Repose angle } \Phi = \text{ARCTAN } (2h/100)$$

Where h is the maximum height of the powder cone than can be obtained, all surface of the plastic vessel being covered with powder.
Results from the repose angle test (values are mean of 3 measurements and standard deviation is indicated).

|  | Whey protein micelle powder | Mixed whey protein micelle powder | Whey protein isolate | Low heat skim milk powder |
|---|---|---|---|---|
| Repose angle (°) | 24.6±1.1 | 27.3±0.7 | 34.3±0.5 | 43.8±2.8 |

Repose angle results clearly show that whey protein micelle powder, pure or mixed with maltodextrins, exhibit a significantly lower angle than the initial whey protein powder or even skim milk powder. A repose angle lower than 35° is characteristic of very well flowing powders.

**Claims**

1. A pasteurized frozen dessert, having per weight more than 6%, preferably more than 8%, most preferred more than 10% protein content and an essentially neutral pH value, the fat caloric value being less than 45%.

2. The frozen dessert according to claim 1, wherein the protein content is essentially constituted by whey protein.

3. A frozen dessert according to claim 1 or 2, wherein at least 15-30% energy is provided by proteins, between 0-45% energy is provided by fat, between 25-85% energy is provided by carbohydrates.

4. The frozen dessert according to any of claims 1 to 3, wherein the fat caloric value is less than 35%, preferably less than 25%, even more preferred less than 15%, most preferred less than 10%.

5. The frozen dessert according to any of claims 1 to 4, having a whey protein content of more than 12%, more preferred more than 14%, even more preferred more than 16%, most preferred more than 18%.

6. The frozen dessert according to any of claims 1 to 5, having a pH value of between 6 and 8.

7. The frozen dessert according to any of claims 1 to 6, comprising fat.

8. The frozen dessert according to any of claims 1 to 7, wherein the whey protein is at least partially present as whey protein micelles.

9. The frozen dessert according to any of claims 1 to 8, wherein the frozen dessert is an ice cream, a milk shake, a sorbet, a mellorine, a smoothy, a water ice, a soft ice.

10. A pasteurized frozen ice cream, having per weight at least 8% proteins, 15% to 28% carbohydrates, and 3% to 7% fat.

11. The ice cream according to claim 10, having a protein content of more than 10%, preferably more than 12%.

12. The ice cream according to claim 10 or 11, having a carbohydrate content of 20% to 26%.

13. The ice cream according to any of claims 10 to 12, having a fat content of 4% to 6%.

14. The ice cream according to any of claims 10 to 13,
    wherein at least a portion of the protein content is present as whey protein micelles.

15. A frozen dessert or ice cream according to any of claims 1 to 14, wherein said frozen dessert or ice cream has an overrun of 20-200%, preferably of 70-150%.

16. A frozen dessert or ice cream according to any of claims 1 to 15, wherein said frozen dessert or ice cream comprises milk fat, one or more vegetable fats or mixtures thereof.

17. A frozen dessert or ice cream according to any of claims 1 to 16, wherein said frozen dessert or ice cream further contains vitamins, minerals, probiotics.

Curd    Micelles    Soluble aggregates

pH 5.0 - 5.2 - 5.4 - 5.6 - 5.8 - 6.0 - 6.2 - 6.4 - 6.6 - 6.8 - 7.0

Figure 1

Figure 2

Figure 3

Figure 4

Figure 5

diameter: 229 nm
ζ-potential: + 25 mV

diameter: 227 nm
ζ-potential: - 30 mV

Figure 6

Figure 7

Figure 8

Figure 9

Figure 10

NaCl concentration

0M    0.05M    0.1M    0.15M    0.2M

Figure 11

OM        0.05M        0.1M        0.15M        0.2M

NaCl concentration

Figure 12

Figure 13

Figure 14

Figure 15

Figure 16

34

EP 1 847 180 A2

Mixing ratio < 5:1
Single WPM
Single SBO

Mixing ratio = 5:1
Monolayer coated WPM
Over-aggregation

Mixing ratio > 5:1
Bilayer SBO coated WPM

Figure 17

Figure 18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060008557 A
- US 6767575 B1
- GB 1079604 A
- WO 9307761 A
- US 5750183 A
- WO 9117665 A
- EP 1281322 A
- EP 0603981 A

**Non-patent literature cited in the description**

- **ELOFSSON et al.** *International Dairy Journal,* 1997, 601-608
- **KILARA et al.** *Journal of Agriculture and Food 20 Chemistry,* 1998, 1830-1835
- **ERDMAN.** *Journal of American College of Nutrition,* 1990, 398-409